# EUROPÄISCHE PATENTSCHRIFT

(11) **EP 2 015 642 B1**
(45) Veröffentlichungstag und Bekanntmachung des Hinweises auf die Patenterteilung: **30.09.2015**
(21) Anmeldenummer: 07720110.1
(22) Anmeldetag: 02.05.2007
(51) Int. Cl.: A23G 3/42, A23G 3/34

(54) **TIEFTEMPERATUR MOGUL VERFAHREN**
LOW-TEMPERATURE MOGUL PROCEDURE
PROCÉDÉ MOGUL À FAIBLE TEMPÉRATURE

(30) Priorität: 05.05.2006 DE 102006021280
(43) Veröffentlichungstag der Anmeldung: 21.01.2009
(73) Patentinhaber: InnoGEL AG, 6331 Hünenberg (CH)
(72) Erfinder: MÜLLER, Rolf, 8055 Zürich (CH); INNEREBNER, Federico, 8049 Zürich (CH)
(74) Vertreter: Becker, Eberhard
(86) Internationale Anmeldenummer: PCT/CH2007/000213
(87) Internationale Veröffentlichungsnummer: WO 2007/128150

(56) Entgegenhaltungen:
- EP-A1- 0 885 568
- WO-A-02/05658
- WO-A-2006/020746
- DE-C- 541 340
- US-A- 3 687 690
- US-A- 3 940 505
- US-A- 4 886 678
- US-A- 4 948 615

## Beschreibung

Die Erfindung beschreibt ein neues Verfahren zur Herstellung von gegossenen gummiartigen Konfektartikeln, insbesondere von gummiartigen Produkten auf Basis von Stärke, gemäß Anspruch 1. Die damit herstellbaren Produkte können ausserdem mit einer Textur erhalten werden, welche der typischen gummielastischen Textur von Gelatine sehr ähnlich ist, ohne dass hierzu notwendigerweise Gelatine eingesetzt werden muss. Die Erfindung betrifft ferner gummiartige, gegossene Konfektartikel gemäß Anspruch 9, welche mit dem erfindungsgemäßen Verfahren hergestellt worden sind.

Ein weites Spektrum an Konfektartikeln wird durch die weit verbreitete Mogul Technologie hergestellt. Dabei wird eine Mischung, die typischerweise die Komponenten Zucker, texturgebende Stoffe, Wasser und Zusatzstoffe (Aroma, Säure, Farbstoffe et.) aufweist, im heissen, flüssigen Zustand für das Giessen der Formen mit der Mogul Anlage bereitgestellt. Die Giessmasse ist dabei eine homogene Lösung, d.h. die Komponenten sind gleichmässig miteinander gemischt, insbesondere sind die texturgebenden Stoffe gelöst und homogen in der Giessmasse verteilt. Die Viskosität der Giessmasse muss dabei genügend tief sein, dass die Giessbarkeit gegeben ist, sie liegt typischerweise im Bereich von < 1 Pas.

Nach dem Giessen in Stärke Puder Formen findet eine Verfestigung des gegossenen Artikels statt, ausgelöst durch Abkühlung, Gelbildung und Reduktion des Wassergehalts durch Diffusion in den Stärke Puder. Typische Zucker sind Saccharose, Polyole und Sirupe aus verflüssigter und verzuckerter Stärke. Die wichtigsten texturgebenden Stoffe sind Gelatine, Pektine, Gummi Arabicum und hydrolysierte Stärke.

Zum Stand der Technik wird auf die folgenden Standardwerke verwiesen: "Sugar confectionery manufacture", E.B. Jackson, ed., Blackie A&P (1995); "The science of sugar confectionery", W.P. Edwards, RSC (2000); "Zucker und Zuckerwaren" , Hoffman/Mauch/Untze, Behr's (2002). Gummiwaren auf Basis von Stärke werden in US 4'726'957, US 5'262'191 und 3'218'177 beschrieben. In EP 1'342'417 A1, EP 1'023'841 A1 und WO 00/44241 werden Lösungen zum Gelatine Ersatz im Bereich der Süsswaren beschrieben. In allen genannten Patentschriften wird wie oben dargestellt zuerst eine Mischung bzw. Lösung hergestellt, wobei schliesslich alle Komponenten gelöst und homogen gemischt sind. Diese homogene Masse wird dann zum Produkt geformt, wonach durch Absenken der Temperatur die Gelierung einsetzt.

Ein Beispiel für die Herstellung einer Konfektmischung findet sich in der US 3,687,690. Dies offenbart ein Verfahren, in dem eine durch Säurebehandlung dünnkochend gemachte, hochamylosehaltige Stärke in Form eines Hydrokolloids mit der Konfektmischung gekocht wird, um das Hydrokolloid zu solubisieren, wonach die Mischung gegossen wird. Die Konfektmischung wird bei hohen Temperaturen hergestellt und hat keine gummielastische Struktur, sondern eine cremige Fondant-Struktur.

Auch die US 4,886,678 betrifft ein Verfahren zur Herstellung von Konfektartikeln auf der Basis von Stärke. Zur Umgehung der Viskositätsproblematik wird zur Herstellung der gelierten Produkte entzweigte Stärke eingesetzt.

Es wurde festgestellt, dass ausgeprägt gummiartiger Konfekt hergestellt werden kann, der vergleichbar ist mit gummiartigem Konfekt auf Basis von Gelatine, wenn statt Gelatine retrogradationsstabile, langkettige Stärke eingesetzt wird. Mit der im Bereich Süsswaren eingesetzten, hydrolysierten, also kurzkettigen Stärke, können solche gummielastischen Eigenschaften nicht erreicht werden. Um ein genügend hohes Niveau von Gummielastizität zu erreichen, sind substanzielle Anteile der langkettigen Stärke notwendig, wodurch die Viskosität der Giessmasse soweit erhöht wird, dass ein Giessen der Masse nicht mehr möglich ist. Es ist ein bekanntes Phänomen, dass die Viskosität mit der Grösse der Moleküle überproportional zunimmt. Bei typischen Rezepturen auf Basis von langkettiger Stärke werden daher Viskositäten erreicht, die mindestens 5-10mal höher sind, als die 1 Pas, welche eine obere Grenze betreffend der Giessbarkeit bezeichnen. Damit waren solche Rezepturen bisher nicht mit der Mogul Technologie verarbeitbar.

Mit der vorliegenden Erfindung wurde jedoch überraschenderweise ein Weg gefunden, wie Rezepturen auch mit sehr hohen Gehalten an langkettiger Stärke, welche im gelösten Zustand Viskositäten bis 100Pas und mehr erzeugt, trotzdem mit geringer Viskosität erhalten und gegossen werden können. Um dies zu erreichen, wurde die Stärke in eine Form gebracht, die hier als partikuläre Stärke bezeichnet wird. Es handelt sich dabei um ein Pulver von Stärke Partikeln, die vorzugsweise möglichst kompakt sind und in der flüssigen Phase des Konfekts (Zucker, Glucose Sirup, Wasser) des Konfekts löslich sind. Vor der Zugabe der partikulären Stärke ist die Viskosität sehr tief, da höhermolekulare Komponenten abwesend sind, sodass die flüssige Phase sehr gut mit der Mogul Technologie verarbeitbar ist. Nach der Zugabe der partikulären Stärke wird zunächst die Viskosität nur wenig angehoben, da die partikuläre Stärke in der flüssigen Phase suspendiert ist. In diesem Zustand hat noch keine Lösung der partikulären Stärke in der flüssigen Phase stattgefunden und ist also eine Verarbeitung mittels der Mogul Technologie noch sehr gut machbar. Erst mit Beginn der Lösung der partikulären Stärke steigt die Viskosität der Mischung aus flüssiger Phase und Stärke, erst dann können die langkettigen Stärke Makromoleküle ihre Wirkung hinsichtlich einer massiven Viskositätserhöhung entfalten. Wenn aber die Formgebung noch davor stattgefunden hat, ist nunmehr der Anstieg der Viskosität nicht mehr problematisch. Damit schliesslich ein homogenes gegossenes Produkt entstehen kann, ist notwendig, dass die partikuläre Stärke vorzugsweise vollständig gelöst bzw. gequollen wird. Dabei also ist die homogene Mischung erst nach der Formgebung entstanden und nicht vorher, wie dies bei der traditionellen Mogul Technologie üblich ist. Es wurde gefunden, dass das Zeitfenster der Verarbeitbarkeit der Mischung von flüssiger Phase und partikulärer Stärke und der Zeitraum der Lösung der partikulären Stärke nach der Formgebung bis hin zur vollständigen Homogenisierung durch einige Parameter wie z.B. Temperatur, Grösse, Art und Zusammensetzung der Partikel der partikulären Stärke beeinflusst und für die Erfordernisse verschiedener Typen von Mogul Anlagen optimiert werden kann.

Im Wesentlichen beschreibt die vorliegende Erfindung ein Verfahren, wie Rezepturen, die typischen Rezepturen entsprechen, wie sie in WO 2004/056192 des gleichen Anmelders beschrieben sind, und typische gummielastische Texturen ermöglichen, mit der Mogul Technologie verarbeitet werden können, während entsprechende Texturen der WO 2004/056192 mittels Extrusion verarbeitet werden, da sie für den Giessvorgang zu hochviskos sind. Die Offenbarung der WO 2004/056192 ist hiermit eingeschlossen.

Die hier beschriebene Erfindung ist auch für die folgenden Anmeldungen desselben Anmelders, deren Offenbarung hiermit in dieser Anmeldung eingeschlossen ist, von Bedeutung: WO 2003/035026, WO 2003/035044, WO 2003/035045, WO 2004/085482, WO 2004/091770, WO 2004/085483, WO 2004/023890 sowie PCT/CH2006/000409 (WO 2007/014484).

### Ausführliche Beschreibung

### Partikuläre Stärke

Im Folgenden wird die Erfindung auf Basis von partikulärer Stärke beschrieben.

Partikelgrösse. Je kleiner die mittlere Partikelgrösse der partikulären Stärke ist, umso schneller findet die Lösung der partikulären Stärke statt, umso kürzer ist das Zeitfenster nach der Einmischung der partikulären Stärke in die flüssige Phase. Ist die Partikelgrösse zu gross, so ist die Löslichkeit nicht mehr gegeben, oder der Lösevorgang dauert zu lange, ausserdem wird die Homogenität der Produkte beeinträchtigt. Die mittlere Partikelgrösse liegt im Bereich von 1 - 500 Mikrometer. In einer bevorzugten Ausführung liegt die Partikelgrösse der partikulären Stärke in Mikrometer im Bereich von 5 - 300, vorzugsweise von 5 - 200, noch bevorzugter von 10 - 150, am bevorzugtesten von 20 - 150.

Stärke. Die partikuläre Stärke weist mindestens eine langkettige Stärke auf. Unter Langkettigkeit wird ein Molekulargewicht von Stärken verstanden, das im Bereich üblicher nativer Stärken liegt. Das Dextrose Äquivalent der langkettigen Stärke liegt im Bereich von 0 - 10. In einer bevorzugten Ausführung liegt das Dextrose Äquivalent im Bereich 0 - 7, vorzugsweise 0 - 5, noch bevorzugter 0 - 3, am bevorzugtesten 0 - 2.

Die langkettige Stärke weist eine geringe bis verschwindende Neigung zur Retrogradation auf. Sie kann nativ oder modifiziert sein. Hinsichtlich des Ursprungs sind Tapioka Stärken besonders bevorzugt. Der Amylosegehalt der langkettigen Stärke in Gew. % liegt bei < 30. In einer bevorzugten Ausführung liegt der Amylosegehalt bei < 25, vorzugsweise < 20, noch bevorzugter < 15, am bevorzugtesten < 10. Es können auch Waxy Stärken eingesetzt werden. Bezüglich der Modifikation kommen substituierte Stärke wie z.B. acetylierte, hydroxypropylierte, hydroxyethylierte, phosphorylierte, oxidierte, oxidierte-acetylierte Stärke sowie die entsprechenden chemisch vernetzten Stärken (z.B. Distärkephosphat, Distärkeadipat) zum Einsatz.

Weichmachergehalt. Je höher der Anteil des Weichmachers in der partikulären Stärke ist, umso schneller findet der Lösevorgang statt. Mit dem Weichmacher also kann ebenfalls auf das Zeitfenster der Verarbeitbarkeit und des nachfolgenden Lösevorgangs Einfluss genommen werden. Ausserdem können Weichmacher wie Glycerin und Sorbitol Bestandteil der Rezeptur sein und können dann wahlweise über die partikuläre Stärke oder über die flüssige Phase eingebracht werden, wobei in diesem Falle die flüssige Phase eine reduzierte Viskosität aufweist, wodurch das Zeitfenster der Verarbeitbarkeit vergrössert wird. Der Weichmachergehalt der partikulären Stärke in Gew. % liegt im Bereich von 0 - 70. In einer bevorzugten Ausführung liegt dieser Wert bei 0 - 40, vorzugsweise 0 - 30, noch bevorzugter bei 0 - 20, am bevorzugtesten bei 0 - 15. Die angegebenen Bereiche gelten individuell für jeden einzelnen Weichmacher. Als Weichmacher kommen die bekannten Weichmacher für Stärke in Frage, insbesondere Glycerin, Sorbitol und weitere Polyole, sowie Oligosaccharide, Zucker und Zuckerarten.

Wassergehalt. Wasser ist der effizienteste Weichmacher für Stärke und wirkt in gleicher Art und Weise. Der Wassergehalt sollte tief genug sein, damit die partikuläre Stärke im eingefrorenen Zustand vorliegt. Je tiefer der Wassergehalt ist, umso länger ist das Zeitfenster der Verarbeitbarkeit der Suspension. Der Wassergehalt der partikulären Stärke in Gew. % liegt im Bereich 0 - 25. In einer bevorzugten Ausführung liegt der Wassergehalt im Bereich 1 - 25, bevorzugt 1.5 - 20, noch bevorzugter 2 - 15, am bevorzugtesten 2.5 - 11.

Hydrokolloide. Die partikuläre Stärke kann Hydrokolloide aufweisen, wodurch ihr Lösungsverhalten wie auch die Textur der Produkte modifiziert werden können. Ebenso kann der benötigte Anteil der Stärke beeinflusst, bzw. reduziert werden. Als Hydrokolloide kommen beispielsweise Agar, Carrageenan, Xanthan, Gellan, Galactomannane, Gummi Arabicum, Tragacanth, Karaya, Curdlan, beta Glucan, Alginate, Mannane, Chitosan, Cellulosen, Proteine, Gelatine, Pektine, Stärke (nicht-langkettige Stärke, wie z.B. hydrolysierte und/oder oxidierte Stärke). Der Anteil eines Hydrokolloids in Gew.% liegt im Bereich 0 bis 70. In einer bevorzugten Ausführung liegt der Anteil bei 0 bis 50, vorzugsweise 0 - 30, noch bevorzugter 0 - 20, am bevorzugten 0 - 15. Diese Angaben gelten individuell für jedes einzelne Hydrokolloid.

Kurzkettige Stärke. Die partikuläre Stärke kann kurzkettige Stärke aufweisen. Als kurzkettige Stärke wird Stärke mit einem mittleren Polymerisationsgrad von 15 - 100, vorzugsweise 15 - 50, noch bevorzugter 15 - 30, am bevorzugtesten 15 - 25, verstanden. Die kurzkettige Stärke ist vorzugsweise kristallisierbar und/oder substanziell linear bzw. entzweigt. Sie führt zu Netzwerken mit der langkettigen Stärke mittels Heterokristallisation und liefert so einen zusätzlichen Beitrag zur Gummielastizität. Der Anteil der kurzkettigen Stärke in Gew.% bezogen auf die partikuläre Stärke liegt dann bei 0 - 50. In einer bevorzugten Ausführung liegt dieser Anteil bei 1 - 40, vorzugsweise 2 - 30, noch bevorzugter 2 - 20, am bevorzugtesten 2 - 15.

Struktur. Der Zustand der langkettigen Stärke sowie gegebenenfalls der kurzkettigen Stärke und der Hydrokolloide innerhalb der Partikel der partikulären Stärke ist mindestens teilweise amorph, vorzugsweise substanziell amorph. Ein amorpher Zustand ist eine Voraussetzung zur Lösung in der flüssigen Phase, wenn die Komponente in kristalliner Form darin unlöslich ist, was meist der Fall ist. Diese Bedingung ist gleichbedeutend damit, dass die partikuläre Stärke in einer verzögert- instant-löslichen Form eingesetzt wird.

Form. Die Form der partikulären Stärke hat einen deutlichen Einfluss auf das Verarbeitungsfenster. Mit einer sphärischen Geometrie wird bei gleicher nomineller Korngrösse im Vergleich zu einer Plättchen oder Splitter Form ein längeres Verarbeitungsfenster erhalten. Daher wird eine möglichst sphärische, kompakte Geometrie bevorzugt. Eine kompakte Form kommt in einer hohen Schüttdichte zum Ausdruck. Bei einer mittleren Korngrösse von > 50 Mikrometer ist die Schüttdichte in g/cm3 > 0.5, vorzugsweise > 0.55, am bevorzugtesten > 0.60. Bei einer mittleren Korngrösse von > 85 Mikrometer ist die Schüttdichte > 65, vorzugsweise > 70, am bevorzugtesten > 75.

Zustand. Die Glasübergangstemperatur in °C der partikulären Stärke liegt bei > 0. In einer bevorzugten Ausführung liegt diese Temperatur bei > 15, vorzugsweise > 25, noch bevorzugter > 45, am bevorzugtesten > 60. Durch diese Bedingung liegt die partikuläre Stärke in einem eingefrorenen Zustand vor, damit ist die Struktur stabil und findet keine Gelierung bzw. Netzwerkbildung statt, wodurch der spätere Lösungsvorgang beeinträchtigt würde. Ausserdem ist die Vermahlung der partikulären Stärke gut möglich, sowie ist ein gutes Handling garantiert (keine Klebrigkeit, keine Klumpenbildung).

Herstellung. Die partikuläre Stärke bzw. die Komponenten, welche darin enthalten sind, werden allgemein durch ein Verfahren aufbereitet, das die Einstellung der definierten Struktur sicherstellt und die gewünschte Korngrösse und Form liefert. Dies wird durch Lösen, Gelatinisierung oder Plastifizieren der Stärke(n) und gegebenenfalls der Hydrokolloide erreicht. In Kombination können dann Sprühtrocknung, Walzentrocknung oder Extrusion eingesetzt werden. Zur Einstellung bzw. Modifikation der Partikelgrösse können diverse Mahlverfahren eingesetzt werden. Bevorzugt wird die Extrusion, da hiermit bevorzugte kompakte Partikel der partikulären Stärke erhalten werden können.

### Gesamtrezeptur

Die gesamte Mischung, also die Gesamtrezeptur, setzt sich zusammen aus flüssiger Phase und partikulärer Stärke. Die flüssige Phase beinhaltet substanziell alle Komponenten mit Ausnahme der partikulären Komponente, wobei diese Komponente Anteile an Wasser, Weichmacher, oder anderen Hydrokolloiden als die langkettige Stärke aufweisen kann. Die flüssige Phase kann also irgendeine Zusammensetzung aufweisen, wie sie beim Giessen von Konfekt eingesetzt wird, wobei der Unterschied zum hier beschriebenen Verfahren im Wesentlichen nur darin besteht, dass die Struktur bildende Komponente zunächst abwesend ist. Die flüssige Phase weist also typischerweise Zucker, Wasser, Säure, Aroma und Farbstoff auf und es kommt die ganze Palette dieser und ähnlicher Stoffe zum Einsatz, wie dies dem Fachmann hinlänglich bekannt ist. Jeglicher Konfekt entsprechend dem Stand der Technik, inklusive Variationen und Spezialitäten, ist betreffend alle Aspekte der Produkte hiermit eingeschlossen.

Wassergehalt. Der Wassergehalt der Gesamtrezeptur in Gew.% zum Zeitpunkt des Giessvorgangs liegt im Bereich von 15 - 50. In einer bevorzugten Ausführung liegt dieser Anteil bei 17 - 45, vorzugsweise 19 - 37, noch bevorzugter 21 - 35, am bevorzugtesten 23 - 33.

Anteil der langkettigen Stärke. Der Anteil der langkettigen Stärke in Gew. % bezogen auf die wasserfreie Gesamtrezeptur liegt bei 5 - 60. In einer bevorzugten Ausführung liegt dieser Anteil bei 5 - 45, vorzugsweise 5 - 40, noch bevorzugter 6 - 35, am bevorzugtesten 7 - 31.

Anteil der partikulären Stärke. Der Anteil der partikulären Stärke in Gew.% bezogen auf die wasserfreie Gesamtrezeptur liegt bei 7 - 70. In einer bevorzugten Ausführung liegt dieser Anteil bei 9 - 55, vorzugsweise 11 - 45, noch bevorzugter bei 11 - 40, am bevorzugtesten bei 13 - 35.

Anteil weiterer Hydrokolloide. Der Anteil an weiteren Hydrokolloiden (inklusive nicht-langkettige Stärke und kurzkettige Stärke) in Gew.% bezogen auf die wasserfreie Gesamtrezeptur liegt bei 0 bis 20. In einer bevorzugten Ausführung liegt dieser Anteil bei 0 bis 15, vorzugsweise bei 0 bis 10, noch bevorzugter bei 0 bis 7, am bevorzugtesten bei 0 bis 5. Solche Hydrokolloide können zur Modifikation der Textureigenschaften eingesetzt werden. Sie können über die partikuläre Stärke oder gelöst über die flüssige Phase zugeführt werden.

Weichmachergehalt. Der Anteil an Weichmacher in Gew.% bezogen auf die wasserfreie Gesamtrezeptur liegt im Bereich von 0 - 30. In einer bevorzugten Ausführung liegt dieser Wert bei 0.5 - 20, vorzugsweise 1 - 15, noch bevorzugter bei 1.5 bis 15, am bevorzugtesten bei 2 bis 10. Die angegebenen Bereiche gelten individuell für jeden einzelnen Weichmacher. Sie können als Feuchthaltemittel, zur Modifikation der Textur, für die Verarbeitbarkeit (Lösung der partikulären Stärke) und für organoleptische Eigenschaften eingesetzt werden.

Wassergehalt des Produkts. Der Wassergehalt beim Zeitpunkt der Verpackung des Produkts in Gew.% bezogen auf die Gesamtrezeptur liegt bei 4 - 25. In einer bevorzugten Ausführung liegt dieser Anteil bei 5 - 22, bevorzugt bei 6 - 20, noch bevorzugter bei 7 - 18, am bevorzugtesten bei 8 - 15.

### Modifizierte Verfahren

Zur grosstechnischen Herstellung von Konfekt Produkten basierend auf partikulärer Stärke können übliche Mogul Anlagen eingesetzt werden. Der zentrale Unterschied besteht darin, dass gegenüber der gängigen Mogul Technologie, wo Giesstemperaturen im Bereich von 60 bis 100°C eingesetzt werden die Temperatur der Giessmasse beim Giessen reduziert wird. Die Giesstemperatur in °C liegt im Bereich -20 bis 90. In einer bevorzugten Ausführung liegt diese Temperatur im Bereich -5 bis 90, noch bevorzugter im Bereich -3 bis 70, am bevorzugtesten im Bereich -2 bis 50. Mogul Suspensionen auf Basis von partikulärer Stärke werden also bei vergleichsweise tiefer Temperatur gegossen. Gummiwaren auf Basis von üblichen Geliermitteln wie z.B. Gelatine oder Pektine werden nach dem Giessen bei moderaten Temperaturen von unterhalb 40°C gelagert, da die Gelbildung bei tiefen Temperaturen einsetzt. Beim Konfekt auf Basis von partikulärer Stärke ist auch hier die Situation umgekehrt. Es können vergleichsweise hohe Temperaturen bei der Gelierung und Lagerung zum Einsatz kommen. Diese Temperatur in °C liegt im Bereich 15 - 70. In einer bevorzugten Ausführung liegt sie bei 20 - 65, noch bevorzugter bei 25 - 60 am bevorzugtesten bei 28 - 55. Hohe Gelierungs- bzw. Lagertemperaturen sind vorteilhaft, da hiermit die Gelierungs- bzw. Lagerzeiten reduziert werden können, das Verfahren also beschleunigt wird.

Da das Zeitfenster der Verarbeitbarkeit begrenzt ist, nachdem die partikuläre Stärke der flüssigen Phase zugemischt worden ist, können in Abweichung zu den Standardverfahren folgende Modifikationen des Verfahrens eingesetzt werden:
1. Die Mogul Suspension wird in einem Vorratsbehälter, der die Mogul Anlage speist, unter solchen Bedingungen gelagert, dass die Lösung bzw. Quellung der partikulären Stärke unterbleibt bzw. sehr langsam vor sich geht, dass faktisch über einen längeren Zeitraum von typischerweise 1h ein konstanter Zustand besteht. Dies wird durch eine Reduktion von Wassergehalt von standardmässig um 29% und/oder Temperatur erreicht. Die Lösung der partikulären Stärke wird dann durch die Temperaturzunahme beim bzw. nach dem Giessen ausgelöst. So konnte beispielsweise eine Rezeptur mit 25% partikulärer Stärke von 100-140□m Korngrösse und 25% Wassergehalt bei 13°C während einer Stunde bei konstanter Viskosität erhalten werden. Wird eine solche Mischung in Stärke Puder Formen gegossen, so erfolgt die Lösung der partikulären Stärke bei 35°C nach 4h, bei 40°C nach 3h bei 45°C bei 2h und bei 50°C bei 1.5h. Wird die Korngrösse erhöht, so kann eine stabile Suspension auch schon bei höheren Temperaturen bzw. höheren Wassergehalten erhalten werden. Geeignete Bedingungen können also durch eine ausgewählte Kombination von Korngrösse, Zusammensetzung der partikulären Stärke (z.B. Polyolgehalt), Wassergehalt, Temperatur und Viskosität der flüssigen Phase eingestellt werden. Angaben zu vorteilhaften Kombinationen sind aus den Tabellen 1 und 2 ersichtlich.
2. Entsprechend einer anderen Variante wird eine während etwa 1 Stunde stabile Mogul Suspension durch einen tiefen Wassergehalt von < 29%, vorzugsweise < 25%, am bevorzugtesten < 22% erreicht. Diese Suspension wird in die Mogulanlage dosiert und dabei werden einige % zusätzliches Wasser eingemischt, sodass die resultierende Mischung bei den Gelierungs- und Lagertemperaturen, die oben erwähnt sind, sich löst bzw. ausreichend quillt.
3. Auch Kombinationen aus den Varianten 1 und 2 sind machbar.
4. Eine weitere Möglichkeit besteht darin, dass die flüssige Phase zur Mogul Anlage dosiert wird und die partikuläre Stärke kontinuierlich eingemischt wird.
5. Bei Mogul Anlagen, die mit einem Zwischenspeicher ausgestattet sind, dessen Volumen innerhalb eines kurzen Zeitraumes von etwa maximal 20min verarbeitet wird, kann die fertige Giessmasse auf Temperaturen im Zwischenspeicher im Bereich von etwa 20 bis 40°C eingestellt werden und durch den Einsatz einer hierfür optimalen partikulären Stärke kann dann ein genügend langes Verarbeitungsfenster erhalten werden (vgl. Tabellen 1 und 2).

### Beispiele

### Beispiel 1: Giessbarkeit von Mogul Suspensionen mit 25% partikulärer Stärke.

In Tabelle 1 sind für eine Auswahl an Rezepturen die entsprechenden Zeitfenster für die Giessbarkeit aufgeführt. Es ist der Einfluss der Temperatur, der Korngrösse der partikulären Stärke, des Wassergehalts der Gesamtmischung, des Zucker: Glucose Verhältnis, der Typs der Glucose, des Säure Gehalts, sowie des Anteils an zusätzlichem Glycerin (das nicht als Bestandteil der partikuläre Stärke eingebracht wird) ersichtlich.

Die partikuläre Stärke (PK 1#1) wies in Gew.% einen Wassergehalt von 9.9, einen Glyceringehalt von 8 und einen Anteil an kurzkettiger Stärke (mit mittlerem Molekulargewicht von rund 23) von 10 auf. Zur Herstellung der partikulären Stärke wurde ein hydroxypropyliertes Distärkephosphat auf Basis von Tapioka im Extruder plastifiziert, mit gelöster kurzkettiger Stärke und Glycerin gemischt, durch Löchdüsen von 1 mm Durchmesser bei einer Massentemperatur von 125°C ausgetragen und granuliert. Das Produkt wies einen Wassergehalt von 10 Gew.% auf und lag in kompaktem, amorphem Zustand vor. Es konnte mit einer Mühle und durch anschliessende Sieb Fraktionierung in verschiedenen Korngrössen erhalten werden.

Die Herstellung der Mogul Suspensionen wird beispielhaft für die Rezeptur M26.1 beschrieben: 28.40g Zuckerlösung (7 Teile Zucker auf 3 Teile Wasser) wurde mit 37.24g Glucose Sirup C*Sweet 01656 (8 Teile Oligosaccharide auf 2 Teile Wasser) sowie mit 10g Wasser, worin 2g Zitronensäure gelöst war, gemischt, wobei diese Lösung 34.3 Gew.% Wasser aufwies. Davon wurde 20g mit 4.86g der partikulären Stärke PK 1#7 gemischt, sodass die Mischung einen Wassergehalt von 29.6 Gew.% und einen Anteil von 25 Gew.% langkettige Stärke bezogen auf die trockene Gesamtrezeptur aufwies. Der Nullpunkt für die Bestimmung der Zeitdauer der Giessbarkeit war durch den Zeitpunkt des Einmischens der partikulären Stärke in die Lösung definiert. Anschliessend wurde evakuiert, um Luftblasen zu entfernen. Die Giessbarkeit wurde durch Giessen eines Formkörpers in Form eines Gummibären in Stärke Puder zu verschiedenen Zeiten untersucht.

### Beispiel 2: Lösungsverhalten von Suspensionen mit 25% partikulärer Stärke.

Die Mogul Suspensionen wurden wie in Beispiel 1 beschrieben mit derselben partikulären Stärke (PK 1#7) hergestellt. Das Auflösungs- bzw. Quellverhalten wurde mit dem Lichtmikroskop untersucht. Die Partikel der partikulären Stärke konnten sehr gut beobachtet werden und wurden mit der Zeit immer kleiner, bis sie schliesslich ganz verschwunden waren. Der Einfluss der Korngrösse, der Temperatur und des Wassergehalt der Gesamtmischung ist in Tabelle 2 wiedergegeben.

### Beispiel 3: Modifikationen.

In Tabelle 3 sind Rezepturen und deren Eigenschaften aufgeführt, die einerseits den Einfluss des Anteils an partikulärer Stärke im Bereich 15 bis 30% zeigen, sowie andererseits den Einfluss von zusätzlichen Polysacchariden wie Xanthan und oxidierte, acetylierte Stärke, die sowohl in gelöstem Zustand über die flüssige Phase als auch im festem (amorphem) Zustand über die partikuläre Stärke zugeführt werden können. Bei allen Rezepturen war das Verhältnis Zucker: Glucose 2 : 3, lag der Wassergehalt beim Giessen bei 29.6% und wurde 1% Zitronensäure und 1% Natriumcitrat eingesetzt. Die Mogul Proben wurden bei 43% Luftfeuchtigkeit 2 Tage gelagert, dann entformt und weiter bei 43% Luftfeuchtigkeit gelagert, wobei sich Wassergehalte von 11.5 bis 12.5% einstellten.

**Tabelle 1: Giessbarkeit**

| **Nr.** | **Temp.** | **Korngrösse der PS** | **Wasser in Gesamt mischung** | **Zucker: Glucose** | **Glucose Sirup** | **Säure** | **Giessbar keit** | **zusätzl. Glycerin** |
|---|---|---|---|---|---|---|---|---|
| | [°C] | [µm] | [%] | [] | [] | [%] | [min] | [%] |
| **M25-1** | 13 | 50-70 | 21.7 | 4:6 | C*Sweet 1656 | 0 | ≥ 240 | 0 |
| **M25-2** | 13 | 70-100 | 21.7 | 4:6 | C*Sweet 1656 | 0 | ≥ 240 | 0 |
| **M25-3** | 13 | 50-70 | 23.8 | 4:6 | C*Sweet 1656 | 0 | ≥ 240 | 0 |
| **M25-4** | 13 | 70-100 | 23.8 | 4:6 | C*Sweet 1656 | 0 | ≥ 240 | 0 |
| **M25**-**5** | 13 | 50-70 | 25.9 | 4:6 | C*Sweet 1656 | 0 | 120 | 0 |
| **M25-6** | 13 | 70-100 | 25.9 | 4:b | C*Sweet 1656 | 0 | 240 | 0 |
| **M25**-**1** | 18 | 50-70 | 21.7 | 4:6 | C*Sweet 1656 | 0 | ≥ 240 | 0 |
| **M25-2** | 18 | 70-100 | 21.7 | 4:6 | C*Sweet 1656 | 0 | ≥ 1 d | 0 |
| **M25**-**3** | 18 | 50-70 | 23.8 | 4:6 | C*Sweet 1656 | 0 | 120 | 0 |
| **M25-4** | 18 | 70-100 | 23.8 | 4:6 | C*Sweet 1656 | 0 | ≥ 240 | 0 |
| **M25**-**5** | 18 | 50-70 | 25.9 | 4:6 | C*Sweet 1656 | 0 | 75 | 0 |
| **M25-6** | 18 | 70-100 | 25.9 | 4:6 | C*Sweet 1656 | 0 | ≥ 240 | 0 |
| **M25**-**1** | 25 | 50-70 | 21.7 | 4:6 | C*Sweet 1656 | 0 | 120 | 0 |
| **M25-2** | 25 | 70-100 | 21.7 | 4:6 | C*Sweet 1656 | 0 | ≥ 240 | 0 |
| **M25**-**3** | 25 | 50-70 | 23.8 | 4:6 | C*Sweet 1656 | 0 | 90 | 0 |
| **M25-4** | 25 | 70-100 | 23.8 | 4:6 | C*Sweet 1656 | 0 | 120 | 0 |
| **M25-5** | 25 | 50-70 | 25.9 | 4:6 | C*Sweet 1656 | 0 | 15 | 0 |
| **M25-6** | 25 | 70-100 | 25.9 | 4:6 | C*Sweet 1656 | 0 | 45 | 0 |
| **M26-1** | 13 | 50-70 | 29.6 | 4:6 | C*Sweet 1656 | 2.7 | 15 | 0 |
| **M26-2** | 13 | 70-100 | 29.6 | 4:6 | C*Sweet 1656 | 2.7 | 35 | 0 |
| **M26-1** | 25 | 50-70 | 29.6 | 4:6 | C*Sweet 1656 | 2.7 | 7 | 0 |
| **M26-2** | 25 | 70-100 | 29.6 | 4:6 | C*Sweet 1656 | 2.7 | 9 | 0 |
| **M26-1** | 30 | 50-70 | 29.6 | 4:6 | C*Sweet 1656 | 2.7 | 6.5 | 0 |
| **M26-2** | 30 | 70-100 | 29.6 | 4:6 | C*Sweet 1656 | 2.7 | 8 | 0 |
| **M27-2** | 35 | 100-140 | 29.6 | 4:6 | C*Sweet 1656 | 2.7 | 8 | 0 |
| **M27-3** | 35 | 140-200 | 29.6 | 4:6 | C*Sweet 1656 | 2.7 | 12 | 0 |
| **M27-1** | 25 | 80-100 | 29.6 | 4:6 | C*Sweet 1656 | 2.7 | 11 | 0 |
| **M 27-2** | 25 | 100-140 | 29.6 | 4:6 | C*Sweet 1656 | 2.7 | 15 | 0 |
| **M 27-3** | 25 | 140-200 | 29.6 | 4:6 | C*Sweet 1656 | 2.7 | 20 | 0 |
| **M 27-4** | 25 | 200-300 | 29.6 | 4:6 | C*Sweet 1656 | 2.7 | 25 | u |
| **M 27-1** | 35 | 80-100 | 29.6 | 4:6 | C*Sweet 1656 | 2.7 | 4 | 0 |
| **M 27-2** | 35 | 100-140 | 29.6 | 4:6 | C*Sweet 1656 | 2.7 | 7 | 0 |
| **M 27-3** | 35 | 140-200 | 29.6 | 4:6 | C*Sweet 1656 | 2.7 | 10 | 0 |
| **M 29-3** | 35 | 200-300 | 29.6 | 4:6 | BC Sweet 1535 | 2.7 | 15 | 0 |
| **M 29-4** | 40 | 200-300 | 29.6 | 4:6 | BC Sweet 1535 | 2.7 | 10 | 0 |
| **M 31**-**1** | 25 | 100-140 | 28.0 | 4:6 | BC sweet 1535 | 2.7 | 22 | 0 |
| **M 31**-**2** | 25 | 100-140 | 26.5 | 4:6 | BC Sweet 1535 | 2.7 | 30 | 0 |
| **M 31-3** | 25 | 100-140 | 25.0 | 4:6 | BC Sweet 1535 | 2.7 | 40 | 0 |
| **M 31-1** | 35 | 100-140 | 28.0 | 4:6 | BC Sweet 1535 | 2.7 | 12 | 0 |
| **M 31-2** | 35 | 100-140 | 26.5 | 4:6 | BC Sweet 1535 | 2.7 | 16 | 0 |
| **M 31-3** | 35 | 1 UU-14U | 25.0 | 4:6 | BC Sweet 1535 | 2.7 | 20 | u |
| **M 31-4** | 35 | 140-200 | 28.0 | 4:6 | BC Sweet 1535 | 2.7 | 15 | 0 |
| **M 31-5** | 35 | 140-200 | 26.5 | 4:6 | BC Sweet 1535 | 2.7 | 18 | 0 |
| **M 31-6** | 35 | 140-200 | 25.0 | 4:6 | BC Sweet 1535 | 2.7 | 25 | 0 |
| **M 32-1** | 35 | 100-140 | 29.6 | 4:6 | C*Sweet 1656 | 2.7 | 6 | 0 |
| **M 32**-**2** | 35 | 100-140 | 28.0 | 4:6 | C*Sweet 1656 | 2.7 | 12 | 0 |
| **M 32-3** | 35 | 100-140 | 26.5 | 4:6 | C*Sweet 1656 | 2.7 | 16 | 0 |
| **M 32**-**4** | 35 | 100-140 | 29.6 | 1:2 | BC Sweet 1535 | 2.7 | 9 | 0 |
| **M 32-5** | 35 | 100-140 | 28.0 | 1:2 | BC Sweet 1535 | 2.7 | 14 | 0 |
| **M 32-6** | 35 | 100-140 | 26.5 | 1:2 | BC Sweet 1535 | 2.7 | 18 | 0 |
| **M 33-1** | 35 | 100-140 | 29.6 | 4:6 | BC Sweet 1535 | 2.7 | 8 | 2 |
| **M 33-2** | 35 | 100-140 | 28.0 | 4:6 | BC Sweet 1535 | 2.7 | 12 | 2 |
| **M 34**-**1** | 35 | 100-140 | 29.6 | 4:6 | BC Sweet 1535 | 2.7 | 10 | 4 |
| **M 34-2** | 35 | 100-140 | 28.0 | 4:6 | BC Sweet 1535 | 2.7 | 15 | 4 |

**Tabelle 2: Auflösungsverhalten**

| | | | | | | | | |
|---|---|---|---|---|---|---|---|---|
| **Wassergehalt der Gesamtmischung [%]** | | **29.5** | **29.6** | **29.6** | **29.6** | **25.0** | **26.5** | **28.0** |
| **Korngrösse der PS [µm]** | | **80-100** | **100 -140** | **140 - 200** | **200 - 300** | **100-140** | **100-140** | **100 - 140** |

| **Temp**. | **Zeit** | **Auflösung der partikulären Stärke (PS)** | | | | | | |
|---|---|---|---|---|---|---|---|---|
| **[°C]** | **[min]** | **[%]** | | | | | | |
| | **15** | 10 | 10 | 5 | 0 | 0 | 0 | 0 |
| | **30** | 25 | 20 | 10 | 0 | 0 | 0 | 5 |
| | **60** | 50 | 40 | 15 | 0 | 0 | 5 | 10 |
| | **90** | 70 | 60 | 20 | 0 | 5 | 10 | 20 |
| | **120** | 85 | 65 | 30 | 5 | 5 | 15 | 25 |
| | **150** | 95 | 65 | 35 | 5 | 10 | 20 | 40 |
| | **180** | 100 | 70 | 40 | 10 | 10 | 25 | 50 |
| | **210** | | 75 | 45 | 10 | 10 | 30 | 60 |
| | **240** | | 75 | 50 | 10 | | 35 | 65 |
| **25** | **270** | | 80 | 55 | 10 | | 40 | 70 |
| | **300** | | 80 | 60 | 15 | | 45 | 70 |
| | **330** | | 85 | 65 | 15 | | 50 | 75 |
| | **360** | | 90 | 70 | 20 | | | 75 |
| | **390** | | 90 | 70 | 25 | | | 80 |
| | **420** | | 90 | 70 | 25 | | | 80 |
| | **24 h** | | 100 | 100 | 70 | | | |
| | **15** | 50 | 30 | 20 | 0 | 5 | 10 | 15 |
| | **30** | 70 | 50 | 45 | 5 | 5 | 15 | 25 |
| | **60** | 90 | 75 | 60 | 10 | 15 | 30 | 45 |
| | **90** | 100 | 85 | 75 | 15 | 25 | 40 | 60 |
| | **120** | | 95 | 80 | 30 | 35 | 50 | 70 |
| | **150** | | 100 | 85 | 40 | 45 | 60 | 80 |
| | **180** | | | 90 | 50 | 50 | 70 | 90 |
| **30** | **210** | | | 95 | 55 | 60 | 75 | 95 |
| | **240** | | | 95 | 60 | 65 | 80 | 95 |
| | **270** | | | 95 | | | 85 | 100 |
| | **300** | | | 95 | | | 85 | |
| | **330** | | | 95 | | | 90 | |
| | **360** | | | 100 | | | | |
| | **24 h** | | | | 95 | | | |
| | **15** | 80 | 60 | 50 | 20 | 20 | 30 | 50 |
| | **30** | 90 | 85 | 80 | 40 | 30 | 50 | 60 |
| | **45** | 100 | 90 | 85 | 50 | 40 | 60 | 70 |
| | **60** | | 95 | 90 | 60 | 50 | 70 | 80 |
| | **75** | | 100 | 95 | 65 | 55 | 80 | 85 |
| **40** | **90** | | | 95 | 70 | 60 | 85 | 90 |
| | **105** | | | 95 | 75 | 65 | 85 | 90 |
| | **120** | | | 100 | 80 | 70 | 90 | 95 |
| | **150** | | | | 85 | 80 | 95 | 100 |
| | **180** | | | | 90 | 85 | 100 | |
| | **240** | | | | 95 | 95 | | |
| | **24 h** | | | | 100 | | | |
| | **15** | 90 | 90 | 80 | 70 | 70 | 80 | 85 |
| | **30** | 100 | 95 | 90 | 85 | 80 | 85 | 90 |
| | **45** | | 100 | 95 | 90 | 85 | 90 | 95 |
| **50** | **60** | | | 100 | 95 | 90 | 95 | 100 |
| | **75** | | | | 95 | 95 | 100 | |
| | **90** | | | | 100 | 100 | | |

**Tabelle 3: Modifikationen**

| **Nr**. | **PS 2)** | **PS** | **Korngrösse** | **Modifikation** | **Beurteilung** |
|---|---|---|---|---|---|
| | [%] | [Typ] | [µm] | | |
| M 19-3 | 15 | PK1#7 | 70-100 | keine | weicher als M19-2 |
| M 19-2 | 20 | PK1#7 | 50-70 | keine | typische Textur von Stärke-Gelatine Mischung |
| M 19-1 | 25 | PK1#7 | 50-70 | keine | typische Textur von Gelatine Gummibonbon (welch) |
| M 11-2 | 30 | PK1#7 | 70-100 | keine | typische Textur von Gelatine Gummibonbon (hart) |
| M 22-1 | 25 | PK1#7 | 50-70 | 1% Stärke 1) In flüssiger Phase | etwas fester als M19-1 |
| M 22-2 | 25 | PK1#7 | 50-70 | 3% Stärke 1) in flüssiger Phase | leicht fester als M22-1 |
| M 22-3 | 25 | PK1#7 | 50-70 | 5% Stärke 1) in flüssiger Phase | leicht fester als M22-2 |
| M 21-1 | 25 | PG10 | 50-70 | 2% Xanthan in partikulärer Stärke | erhöhte Gummielastizität gegenüber M19-1 |
| M 21-3 | 25 | PG11 | 50-70 | 4% Xanthan in partikulärer Stärke | erhöhte Gummielastizität gegenüber M21-1 |
| M 23-5 | 25 | PK1#7 | 70-100 | 0.1% Xanthan in flüssiger Phase | erhöhte Gummielastizität gegenüber M19-1 |
| M 23-6 | 25 | PK1#7 | 70-100 | 0.2% Xanthan in flüssiger Phase | erhöhte Gummielastizität gegenüber M19-1 |
| | | | | | |
| | | | | | |
| 1) Stärke = oxidierte und acteylierte dünnkochende Kartoffelstärke, Anteil bezogen auf trockene Gesamtrezeptur | | | | | |
| 2) Gehalt an partikulärer Stärke bezogen auf die trockene Gesamtrezeptur | | | | | |
| PK 1#7: 9.9% H2O, 8% Glycerin, 10% kurzkettige Stärke | | | | | |
| PG10: 5.9% H2O, 0% Glycerin, 0% kurzkettige Stärke, 2% Xanthan | | | | | |
| PG11: 5.5% H2O, 0% Glycerin, 0% kurzkettige Stärke, 4% Xanthan | | | | | |

## Patentansprüche

1. Gießverfahren zur Herstellung von Konfektartikeln, **dadurch gekennzeichnet, dass** partikuläre Stärke erst zum Zeitpunkt, an dem der Konfektartikel im gegossenen Zustand vorliegt, vollständig in der gegossenen Masse gelöst oder gequollen ist,
wobei die partikuläre Stärke ein Pulver von Stärkepartikeln ist, welches durch Lösen, Gelatinisieren oder Plastifizieren von mindestens einer Stärke, gegebenenfalls in Kombination mit Sprühtrocknung, Walzentrocknung oder Extrusion und gegebenenfalls Mahlen, erhalten wird.

2. Verfahren nach Anspruch 1, wobei die partikuläre Stärke in Form von substantiell amorphen Partikeln einer flüssigen Phase zugemischt wird.

3. Verfahren nach Anspruch 2, wobei die Glasumwandlungstemperatur der substantiell amorphen Partikeln bei > 0°C liegt.

4. Verfahren nach einem der vorangehenden Ansprüche, wobei die partikuläre Stärke mit einer mittleren Partikelgröße im Bereich 1 bis 500 Mikrometer der flüssigen Phase zugemischt wird.

5. Verfahren nach einem der vorangehenden Ansprüche, wobei die mindestens eine Stärke langkettig ist und ein Dextrose-Äquivalent im Bereich von 0 bis 10 aufweist.

6. Verfahren nach einem der vorangehenden Ansprüche, wobei die mindestens eine Stärke retrogradationsstabil ist.

7. Verfahren nach Anspruch 5, wobei der Anteil an langkettiger Stärke in Gew. % bezogen auf die trockene gesamte Gießmasse im Bereich von 5 - 60 liegt.

8. Verfahren nach einem der vorangehenden Ansprüche, wobei die Gießmasse zum Zeitpunkt des Gießens eine Temperatur in °C im Bereich - 20 bis 90 aufweist.

9. Gegossener Konfektartikel auf Basis von Stärke, **dadurch gekennzeichnet, dass** der Konfektartikel nach einem Verfahren nach einem der Ansprüche 5 bis 8 hergestellt worden ist, eine gummiartige Textur aufweist und Partikel von partikulärer Stärke enthält,
wobei die zur Herstellung des Konfektartikels eingesetzte partikuläre Stärke ein Pulver von Stärkepartikeln ist, welches durch Lösen, Gelatinisieren oder Plastifizieren von mindestens einer Stärke, gegebenenfalls in Kombination mit Sprühtrocknung, Walzentrocknung oder Extrusion und gegebenenfalls Mahlen, erhalten wird, und die mindestens eine Stärke langkettig ist und ein Dextrose-Äquivalent im Bereich von 0 bis 10 aufweist.

## Claims

1. A casting method for manufacturing confectionery articles, **characterized in that** particulate starch is completely dissolved or swelled in the cast compound after the confectionery article has been cast,
wherein the particulate starch is a powder of starch particles which is obtained by dissolution, gelatinization or plastification of at least one starch, optionally in combination with spray drying, roller drying or extrusion, and optionally milling.

2. The method according to claim 1, wherein the particulate starch in the form of substantially amorphous particles is mixed in with a liquid phase.

3. The method according to claim 2, wherein the glass transition temperature of the substantially amorphous particles measures > 0°C.

4. The method according to any one of the preceding claims, wherein the particulate starch is mixed in with the liquid phase with an average particle size ranging from 1 to 500 micrometers.

5. The method according to any one of the preceding claims, wherein the at least one starch is long-chained and has a dextrose equivalent within a range of 0 to 10.

6. The method according to any one of the preceding claims, wherein the at least one starch is retrogradation stable.

7. The method according to claim 5, wherein the share of long-chained starch in percent by weight ranges from 5 to 60 relative to the dry overall casting compound.

8. The method according to any one of the preceding claims, wherein the casting compound has a temperature in °C ranging from -20 to 90 at the time of casting.

9. A cast confectionery article based on starch, **characterized in that** the confectionery article is manufactured by a method according to any one of claims 5 to 8, has a rubber-like texture and comprises particles of particulate starch,
wherein the particulate starch used for manufacturing the confectionery article is a powder of starch particles which is obtained by dissolution, gelatinization or plastification of at least one starch, optionally in combination with spray drying, roller drying or extrusion, and optionally milling, and wherein the at least one starch is long-chained and has a dextrose equivalent within a range of 0 to 10.

## Revendications

1. Procédé de coulée destiné à fabriquer des articles de confiserie, **caractérisé en ce que** de l'amidon particulaire n'est entièrement dissous ou n'a entièrement gonflé dans la masse coulée qu'à partir du moment auquel l'article de confiserie se présente à l'état fondu,
l'amidon particulaire étant une poudre de particules d'amidon, laquelle est obtenue par dissolution, gélatinisation ou plastification d'au moins un amidon, le cas échéant en association avec un séchage par pulvérisation, un séchage au tambour ou une extrusion et le cas échéant, un broyage.

2. Procédé selon la revendication 1, l'amidon particulaire étant ajouté par mélange à une phase liquide sous la forme de particules substantiellement amorphes.

3. Procédé selon la revendication 2, la température de vitrification des particules substantiellement amorphes étant > 0°C.

4. Procédé selon l'une quelconque des revendications précédentes, l'amidon particulaire étant ajouté par mélange à la phase liquide avec une taille moyenne des particules de l'ordre de 1 à 500 micromètres.

5. Procédé selon l'une quelconque des revendications précédentes, l'au moins un amidon étant à chaînes longues et comportant un équivalent de dextrose de l'ordre de 0 à 10.

6. Procédé selon l'une quelconque des revendications précédentes, l'au moins un amidon étant stable à la rétrogradation.

7. Procédé selon la revendication 5, la part d'amidon à chaînes longues par rapport à la totalité de la masse fondue sèche étant de l'ordre de 5 à 60, exprimée en % en poids.

8. Procédé selon l'une quelconque des revendications précédentes, au moment de la coulée, la masse fondue présentant une température de l'ordre de -20 à 90, exprimée en °C.

9. Article de confiserie coulé sur la base d'amidon, **caractérisé en ce que** l'article de confiserie a été fabriqué d'après un procédé selon l'une quelconque des revendications 5 à 8, présente une texture caoutchouteuse et contient des particules d'amidon particulaire,
l'amidon particulaire mis en oeuvre pour la fabrication de l'article de confiserie étant une poudre de particules d'amidon, laquelle est obtenue par dissolution, gélatinisation ou plastification d'au moins un amidon, le cas échéant en association avec un séchage par pulvérisation, un séchage au tambour ou une extrusion et le cas échéant un broyage et l'au moins un amidon étant à chaînes longues et comportant un équivalent de dextrose de l'ordre de 0 à 10.
